# EUROPÄISCHE PATENTANMELDUNG

(11) **EP 1 279 815 A2**
(43) Veröffentlichungstag der Anmeldung: **29.01.2003**
(21) Anmeldenummer: 02013684.2
(22) Anmeldetag: 20.06.2002
(51) Int. Cl.: F02D 33/02, F02B 37/12, F02D 41/12, F02D 35/00, F02M 25/08

(54) **Verfahren und Vorrichtung zum Betreiben eines elektrischen Laders**

(30) Priorität: 28.07.2001 DE 10136977
(71) Anmelder: ROBERT BOSCH GMBH, 70442 Stuttgart (DE)
(72) Erfinder: Baeuerle, Michael, 71254 Ditzingen-Heimerdingen (DE); Ries-Mueller, Klaus, 74906 Bad Rappenau (DE)

(57) **Zusammenfassung**

Es werden ein Verfahren und eine Vorrichtung zum Betreiben eines elektrischen Laders beschrieben, bei welchem der elektrische Lader zu Kühlungs- und/oder Diagnosezwecken im nicht gefeuerten Betrieb der Brennkraftmaschine betätigt wird.

## Beschreibung

### Stand der Technik

Die Erfindung betrifft ein Verfahren und eine Vorrichtung zum Betreiben eines elektrischen Laders, wobei unter anderem auf der Basis des Betriebs des elektrischen Laders wenigstens eine mit dem Saugrohr einer Brennkraftmaschine zusammenhängende Komponente diagnostiziert wird.

Es ist bekannt, die Leistung einer Brennkraftmaschine durch Verdichtung der zur Verbrennung des Kraftstoffs benötigten Luft mittels eines Abgasturboladers zu erhöhen, welcher aus einer Turbine und einem in der Luftzuführung zur Brennkraftmaschine betriebenen Verdichter besteht. Zur Verbesserung des Ansprechverhaltens des Abgasturboladers ist es bekannt, den Abgasturbolader mittels eines elektrischen Hilfsantriebs zu unterstützen. Das kann beispielsweise durch einen in den Abgasturbolader integrierten Elektromotor erreicht werden, der bei kleinen Drehzahlen der Brennkraftmaschine die Welle des Abgasturboladers unterstützend antreibt. Beispielsweise aus dem US-Patent 6 029 452 ist bekannt, einen elektrisch betriebenen Ladeluftverdichter, welcher auch als elektrisch betriebener Hilfslader (EL) bezeichnet wird, in der Luftzuführung der Brennkraftmaschine in Reihe zu einem konventionellen Abgasturbolader zu betreiben.

Somit zeigt der Stand der Technik eine Einsatzmöglichkeit eines elektrischen Hilfsladers bzw. eines elektrischen Laders, welcher die Funktionsweise eines Abgasturboladers ergänzt bzw. ersetzt und das Verhalten der Brennkraftmaschine optimiert. Weitere Einsatzmöglichkeiten eines solchen elektrisch betriebenen Laders werden nicht angegeben.

Aus der DE 43 12 720 A1 ist ein Verfahren zur Prüfung der Funktionsfähigkeit einer Tankentlüftungsanlage bekannt, bei welchem während des Betriebs der Brennkraftmaschine zu Überprüfungszwecken bei Laderbetrieb das Tankentlüftungsventil geschlossen, das Tankabsperrventil geöffnet wird. Anhand des sich aufbauenden Überdrucks im Tank wird auf die Funktionsfähigkeit der Tankentlüftungsanlage geschlossen.

Andere Vorgehensweisen zur Diagnose einer Tankentlüftungsanlage verwenden zusätzliche Druckquellen, mit deren Hilfe Dichtheitsprüfungen der Tankentlüftungsanlage durchgeführt werden (vgl. z.B. DE 198 09 384 C2).

### Vorteile der Erfindung

Durch Ansteuern des elektrisch betriebenen Laders nach Abstellen des Fahrzeugs wird ein weiterer Betriebsbereich für die Motorsteuerung eröffnet, in welchem Funktionen durchgeführt werden, die auf einen Luftstrom im Saugrohr und/oder im Abgastrakt des Fahrzeugs angewiesen sind. Die Flexibilität einer Motorsteuerung, insbesondere im Diagnosebereich, wird dadurch deutlich erhöht.

In besonders vorteilhafter Weise erfolgt die Ansteuerung des elektrisch betriebenen Laders nach Abstellen des Motors zur Kühlung des Motors durch den durch den Motor geführten Luftstrom und/oder zur Kühlung des oder der Katalysatoren im Abgastrakt, die durch den durch den elektrisch betriebenen Lader erzeugten Frischluftstrom abgekühlt werden.

Besondere Vorteile ergeben sich durch den Betrieb des elektrisch betriebenen Laders nach Abstellen des Motors im Diagnosebereich. Dabei lassen sich verschiedene mit dem Saugrohr und/oder dem Abgastrakt verbundene Komponenten im Stand, bei abgeschaltetem Motor, diagnostizieren. Dabei können auch Diagnosemethoden eingesetzt werden, die einen Druck oder einen Luftstrom im Ansaug- oder Abgastrakt benötigen. Ein Betrieb des Motors ist somit nicht notwendig, was Rechenzeit, Speicherplatzbedarf, ect. einspart.

Dadurch werden optimierte Diagnosemethoden und Diagnoseverfahren für mit dem Saugrohr und/oder Abgastrakt zusammenhängende Komponenten ermöglicht.

Besonders vorteilhaft ist, dass eine exaktere Diagnose im Vergleich zur Diagnose im Fahrbetrieb möglich ist, da definierte Umweltbedingungen bei abgeschaltetem Motor bestehen.

Ferner wird in einigen Fällen eine Einsparung von Komponenten, beispielsweise der Überdruckpumpe zur Diagnose des Tankentlüftungsventils, erreicht.

In besonders vorteilhafter Weise wird durch Betreiben des elektrischen Laders nach Abschalten des Motors die Diagnose des Tankentlüftungssystems einer Brennkraftmaschine ermöglicht, insbesondere eine Leckerkennung im Tankentlüftungssystem, die Prüfung der Funktion von Tankentlüftungsventil und Absperrventil (Dichtheitsprüfungen), die Diagnose von Abgasrückführ- und/oder Umluftventilen, Dichtheitsprüfungen von Drosselklappe, Leerlaufsteller, Abgasklappe (beim Dieselmotor), die Diagnose eines Luftmassenmessers, eines Saugrohrdrucksensors, die Diagnose des Turbogebläses, von Lambdasonden oder verschiedenen Temperatursonden wie Abgastemperatursensor, Ansaugtemperatursensor, ect.

In besonders vorteilhafter Weise wird zur Verbesserung des Durchflusses zum Abgastrakt eine definierte Ventilüberschneidung (Einlass-/Auslassventil) durch Ansteuerung eines mit dem Triebstrang verbundenen Kurbelwellenstartergenerators vorgenommen. Dieser betätigt die Brennkraftmaschine derart, dass die Stellungen von Ein- und Auslassventil zu einer definierten Ventilüberschneidung und somit zur Freigabe eines Öffnungsquerschnittes zwischen Saugrohrtrakt und Abgastrakt führen.

Weitere Vorteile ergeben sich aus der nachfolgenden Beschreibung von Ausführungsbeispielen bzw. aus den abhängigen Patentansprüchen.

### Zeichnung

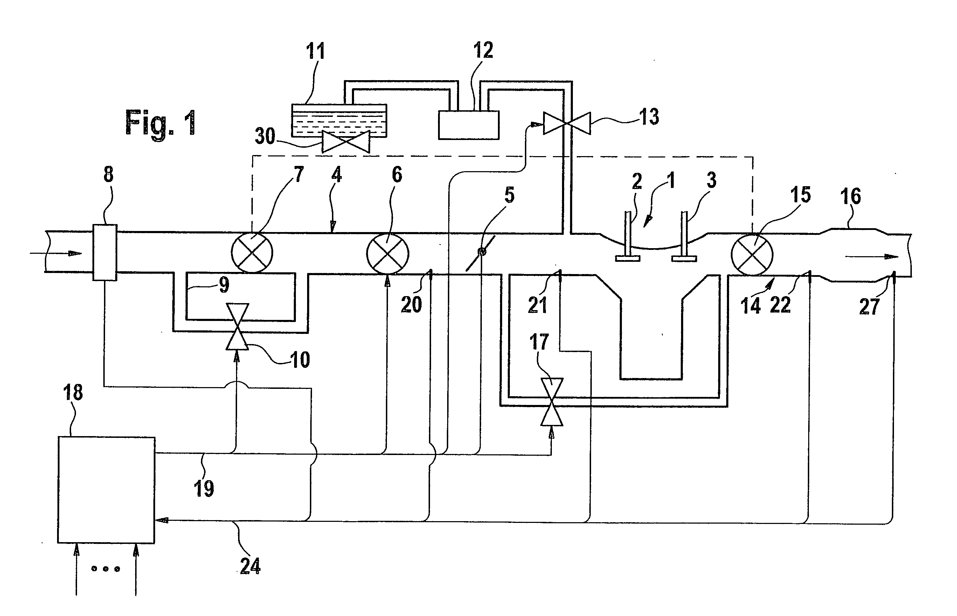

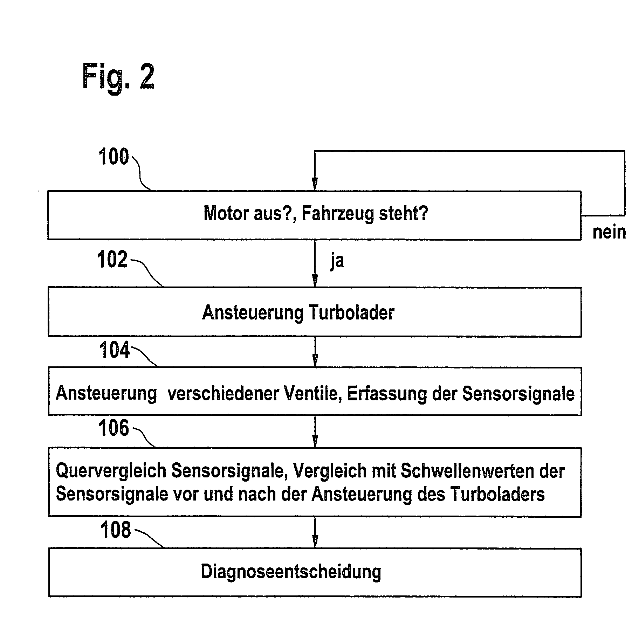

Die Erfindung wird nachstehend anhand der in der Zeichnung dargestellten Ausführungsformen näher erläutert. Figur 1 zeigt dabei ein Ausführungsbeispiel einer Brennkraftmaschine mit beispielhaft aufgeführten Komponenten, während in Figur 2 anhand eines Flussdiagramms eine bevorzugte Vorgehensweise zur Diagnose wenigstens einer mit dem Saugrohrtrakt oder dem Abgastrakt in Verbindung stehenden Komponente dargestellt ist.

### Beschreibung von Ausführungsbeispielen

Figur 1 zeigt ein schematisiertes Übersichtsbild einer Brennkraftmaschine mit Ansaugtrakt und Abgastrakt sowie ausgewählten Komponenten, die im Rahmen der nachfolgend beschriebenen Vorgehensweise erwähnt sind. Die Brennkraftmaschine 1 verfügt über Ein- und Auslassventile 2 und 3. Im Ansaugtrakt 4 der Brennkraftmaschine ist eine Drosselklappe 5 angeordnet, die auch elektrisch betätigbar sein kann, ein elektrischer Lader 6 sowie der Kompressor 7 eines Abgasturboladers. Ferner ist ein Luftmassenmesser 8 vorgesehen, der die Strömungsrate der angesaugten Luft erfasst. In einem Umgehungskanal 9 des Kompressors 7 ist ein Umluftventil 10 angeordnet. Ferner mündet nach der Drosselklappe die Zuleitung des Tankentlüftungssystems ins Saugrohr, welches im Wesentlichen aus dem Tank 11, dem Aktivkohlefilter 12 und dem elektrisch betätigbaren Tankentlüftungsventil 13 und einem Tankabsperrventil 30 besteht. Im Abgastrakt 14 der Brennkraftmaschine befindet sich die Turbine 15 des Abgasturboladers, die mechanisch mit dem Kompressor verbunden ist, sowie wenigstens ein Katalysator 16. Ferner wird eine Abgasrückführleitung vom Abgastrakt über ein Abgasrückführventil 17 zum Saugrohr stromabwärts der Drosselklappe 5 geführt. Eine elektronische Steuereinheit 18 betätigt über Ausgangsleitungen 19 die elektrisch betätigbaren Ventile und Stellelemente wie den elektrischen Lader 6, das Umluftventil 10, das Tankentlüftungsventil 13, das Abgasrückführventil 17, etc. Je nach Ausstattung der Brennkraftmaschine sind weitere Stellelemente in Verbindung mit dem Saugrohr- bzw. Abgastrakt und der daran angegliederten Systeme vorhanden. Beispielsweise ist die Drosselklappe 5 elektrisch betätigbar oder die Drosselklappe 5 ist mit einer Bypassleitung überbrückt, in der ein elektrisch betätigbares Bypassventil vorgesehen ist. Ferner ist das Tankentlüftungssystem mit einem Absperrventil (Aktivkohleabsperrventil) ausgestattet, welches die Entlüftungsleitung des Tanks sperrt. Bei Dieselmotoren sind Abgasklappen vorgesehen, die von der elektrischen Steuereinheit 18 angesteuert den Querschnitt des Abgastraktes zumindest teilweise verringern. Abhängig von der Ausstattung der Brennkraftmaschine werden diese Elemente in beliebiger Kombination eingesetzt.

Mittels Sensoren werden Betriebsgrößen im Bereich von Ansaug- und/oder Abgastrakt gemessen. In Figur 1 sind ausgewählte Sensoren dargestellt: Ein Luftmassenmesser 8, ein Ladedrucksensor 20, ein Saugrohrdrucksensor 21, ein Abgastemperatursensor 22 und eine Lambdasonde 23. Deren Sensorsignale werden von den Eingangsleitungen 24 zur Steuereinheit 18 geführt, die die Sensorsignale im Rahmen der in ihrem Mikrocomputer gespeicherten Programme auswertet und Stellsignale für die verschiedenen Ventile und Stellelemente der Brennkraftmaschine erzeugt. In anderen Ausführungsbeispielen sind weitere Sensoren vorgesehen, die zur Steuerung der Brennkraftmaschine dienen, wobei in manchen Ausführungsbeispielen auch einer oder einige der in Figur 1 dargestellten Sensoren, z.B. der Luftmassenmesser, fehlen.

Durch die Verwendung eines elektrisch betreibbaren Laders 6 ist es möglich, unabhängig vom Betriebszustand der Brennkraftmaschine im Ansaugtrakt und/oder - bei geöffneten Einund Auslassventilen - auch im Abgastrakt eine Luftströmung zu erzeugen und/oder im Ansaugtrakt einen Überdruck aufzubauen.

Diese Möglichkeit wird ausgenutzt zur Motor- oder Komponentenkühlung und/oder zu Diagnosezwecken.

Nach Abstellen des Motors bei stehendem Fahrzeug wird daher beispielsweise für eine vorbestimmte Zeit von der elektronischen Steuereinheit 18 ein Ansteuersignal für den elektrisch betriebenen Lader 6 erzeugt. Dieser bläst Luft vom Saugtrakt über die Ein- und Auslassventile zum Abgastrakt und kühlt auf diese Weise Brennkraftmaschine und deren Komponenten und/oder den Katalysator. Im bevorzugten Ausführungsbeispiel wird der Lader mit einem Ansteuersignal vorbestimmter Größe angesteuert, welches zu einer vorbestimmten Drehzahl und somit zu einer vorbestimmten Luftströmung bzw. einem vorbestimmten Druck im Ansaugtrakt führt. Um die Durchströmung der Zylinder der Brennkraftmaschine und des Abgastrakts zu verbessern, ist vorgesehen, die Brennkraftmaschine mittels eines Elektromotors, insbesondere eines Kurbelwellenstartergenerators, in eine Position zu verschieben, in der eine definierte Öffnung von Ein- und Auslassventil sich ergibt, die eine optimale Durchströmung erlaubt. Ein Öffnen der elektrisch betätigbaren Drosselklappe ist in diesem Fall ebenfalls vorgesehen. Ein anderer Anwendungszeitpunkt ist der nichtgefeuerte Fahrbetrieb, z.B. der Schubbetrieb.

Die Ansteuerung des elektrisch betriebenen Laders erfolgt bei abgeschaltetem Motor und vorzugsweise bei stehendem Fahrzeug, um keine ungewollte Betriebssituationen durch den vom Fahrer nicht gewollten und möglicherweise nicht nachvollziehbaren Luftstrom bzw. Überdruck auszulösen. Das Abstellen des Fahrzeugs wird dabei bevorzugt auf der Basis des Zündschaltersignals und/oder des Drehzahlsignals der Brennkraftmaschine ermittelt, das stehende Fahrzeug auf der Basis von Fahrzeuggeschwindigkeit- oder Radgeschwindigkeitssignalen. Ist der Motor abgestellt und steht das Fahrzeug, wird der elektrisch betriebene Lader 6 wie oben beschrieben betätigt.

Die Möglichkeit, auch bei stehendem, d.h. abgeschaltetem Motor, die Luft- und/oder Druckverhältnisse im Ansaugtrakt und/oder Abgastrakt zu beeinflussen, erlaubt eine verbesserte, exaktere Diagnose von Komponenten, die mit dem Ansaugtrakt und/oder dem Abgastrakt zusammenwirken, insbesondere hinsichtlich ihrer Funktion und/oder Dichtigkeit.

Ein bevorzugtes Anwendungsbeispiel für eine auf das Einschalten des elektrisch betriebenen Laders nach Abschalten des Motors basierenden Diagnose einer Komponente der Brennkraftmaschine ist die Diagnose des Tankentlüftungssystems.
Nach Betätigen des Laders mit einer vorgegebenen Ansteuersignalgröße kommt es zu einem Überdruck im Saugrohrsystem, der sich bei geöffnetem Tankentlüftungsventil 13, ggf. bei einem angesteuerten Überbrückungsventil eines Rückschlagventils und bei einem angesteuerten (geschlossenen) Absperrventil weiter in den Tank fortpflanzt. Mittels eines Saugrohrdruck-, Ladedruck- und/oder Tankdrucksensors wird dieser Druckanstieg erfasst. Bei entsprechendem Überdruck im Tank oder im Saugrohr wird das Tankentlüftungsventil und, wenn vorhanden, das Absperrventil geschlossen. Der dann gemessene Druckabfall wird als Wert für die Dichtigkeit des Tankentlüftungssystems herangezogen. Ist die Zeitdauer des Druckabfalls des Tankdrucks zu klein, d.h. fällt der Druck zu schnell ab, ist von einer Undichtigkeit auszugehen, während bei einer Zeitdauer, die einen vorbestimmten Schwellenwert überschreitet, von einem dichten System ausgegangen wird. Wird zur Auswertung kein Tankdrucksensor verwendet, sondern der Saugrohrdrucksensor 21 oder der Ladedrucksensor 20, so ist bei Dichtigkeit des Tankentlüftungssystems von einem umgekehrten Verhalten auszugehen, nämlich einem schnelleren Abbau des Überdrucks als bei undichtem Tankentlüftungssystem. Andererseits kann hier auch die Diagnose anhand der Schnelligkeit des Druckaufbaus erfolgen, da bei dichtem Tankentlüftungsventil infolge des kleineren Volumens der Druckaufbau schneller erfolgt als bei undichtem System. Alternativ zum Überbrückungsventil wird in einem Ausführungsbeispiel ein Schaltventil verwendet, welches eine direkte Verbindung vom Tank zum Saugrohr öffnet oder schließt. Wird das Ventil geöffnet, kommt es zu einer direkten Verbindung vom Saugrohr zum Tank. Nach dem Druckaufbau öffnet das Ventil wieder die Verbindung. Bei geschlossenem Tankentlüftungsventil und Absperrventil ist zur Diagnose der Druckabfall zu beobachten.

Der wie dargestellt durch den Lader nach Abstellen des Motors aufgebaute Überdruck wird jedoch in einem Ausführungsbeispiel auch zur Diagnose der Dichtigkeit der Drosselklappe bzw., wenn vorhanden, des Leerlaufstellers im Bypass bzw. des die Drosselklappe verstellenden Leerlaufstellers und/oder einer Abgasklappe im Abgastrakt und/oder eines elektrisch verstellbaren Ventiltriebs herangezogen. Dazu wird Überdruck im System aufgebaut und danach die entsprechende(n) Klappe(n) bzw. Ventile geschlossen. Anhand des Druckabfalls (Saugrohrdruck, Ladedruck, Abgasdruck, etc.) wird auf die Dichtigkeit des jeweiligen Stellelements bzw. der jeweiligen Stellelemente geschlossen, wobei bei einer Ausrüstung mit Abgasrückführung das Abgasrückführventil ebenfalls mit einzubeziehen ist. Ist der Druckabfall schneller als eine Referenzgröße, so ist das oder die diagnostizierten Ventile undicht, ansonsten dicht.

Eine Diagnose eines einzelnen Ventils wird dadurch bereitgestellt, dass die Werte für Druckaufbau und/oder Druckabfall bei geöffnetem und bei geschlossenem Ventil miteinander oder mit vorgegebenen Referenzgrößen verglichen werden und bei unzulässigen Abweichung zwischen den Größen eine Undichtigkeit des Ventils festgestellt wird. Die Stellungen der anderen Ventile oder Stellelemente bleiben dabei unverändert.

Entsprechend erfolgt eine Diagnose des Umluftventils 10 oder des Abgasrückführventils 17, wobei die Diagnose darauf aufbaut, dass bei aufgebautem Überdruck unterschiedliche Druckabfälle bei geöffnetem und geschlossenem Ventil auftreten müssen. Durch Auswertung der jeweiligen Druckabfälle wird eine Aussage über die Dichtigkeit des entsprechenden Ventils gewonnen. Kann die Kurbelwellenstellung mittels eines Anlassers oder Kurbelwellenstartergenerators verändert werden, so kann das Verfahren auch bei verschiedenen Kurbelwellenstellungen und damit Ventilüberschneidungen durchgeführt werden.

Als Messgröße zur Erfassung des Druckabfalls wird je nach Ausstattung der Brennkraftmaschine der Ladedrucksensor 20 oder das Signal des Saugrohrdrucksensors 21 oder das Luftmassensignal des Heißfilmluftmassenmessers verwendet.

In einer vorteilhaften Erweiterung werden nicht nur Stellelemente diagnostiziert, sondern auch Sensoren. Durch die definierte Ansteuerung des elektrisch betätigbaren Laders 6 erfolgt eine definierte Luftströmung, die vom Luftmassenmesser 8 erfasst wird. Zur Diagnose des Luftmassenmessers 8 wird dessen Messsignal mit vorgegebenen Grenzwerten verglichen. Diese Grenzwerte werden aus der bei betätigtem Lader im abgestellten Zustand des Motors zu erwartendem Luftstrom bei der vorgegebenen Betätigungsgröße abgeleitet. Ein Fehler im Luftmassenmesser wird erkannt, wenn das Messsignal bei angesteuertem elektrischen Lader dieses Toleranzband verlässt.

Eine entsprechende Vorgehensweise lässt sich auch für die Lambdasonde 23 und verschiedene Temperatursensoren im Saugrohr und/oder im Abgastrakt, beispielsweise dem Abgastemperaturfühler 22, realisieren. Durch den durch die Brennkraftmaschine strömenden Luftstrom bei Betätigen des Laders erfolgt eine schnelle Abkühlung der Temperatur des Saugrohrs bzw. des Abgases, welche durch einen über den normalen Abkühlungsverlauf hinausgehende schnellere Abkühlung der entsprechenden Komponente und damit eine schnellere Absenkung des Temperatursignals herbeiführt. Ist also die Änderung des Temperatursignals größer als eine vorgegebene, bei einer üblichen Abkühlung vorhandenen Absenkung, so ist von einer korrekten Funktionsweise des Temperatursensors auszugehen, anderenfalls von einem Defekt.

Die beschriebene Vorgehensweise zur Diagnose von wenigstens einer mit dem Ansaugtrakt oder dem Abgastrakt in Verbindung stehenden Komponente wird von einem Programm des Mikrocomputers der elektronischen Steuereinheit 18 durchgeführt. Ein Beispiel für ein solches Programm ist in Figur 2 dargestellt. Das Programm wird zyklisch durchlaufen.

Im ersten Schritt 100 wird überprüft, ob der Motor ausgeschaltet ist und das Fahrzeug steht. Dieser Schritt wird bis zum Ausschalten des Motors und zum Stillstand des Fahrzeugs wiederholt. Ist der Motor ausgeschaltet und steht das Fahrzeug, so wird gemäß Schritt 102 der elektrisch betriebene Turbolader angesteuert. Daraufhin wird im Schritt 104 je nach zu diagnostizierender Komponente verschiedene Ventile angesteuert. Beispielsweise wird bei der Diagnose des Tankentlüftungsventils dieses geöffnet. Nach Ablauf einer vorbestimmten Zeit oder bei Erreichen eines bestimmten Überdrucks wird das Tankentlüftungsventil 13 geschlossen. Parallel dazu werden die zur Verfügung stehenden Sensorsignale eingelesen. Im darauffolgenden Schritt 106 werden dann die Sensorsignale ausgewertet, im Beispiel der Diagnose des Tankentlüftungsventils, ob der Druckabfall einem vorgegebenen, den Normalbetriebszustand repräsentierenden Verlauf aufweist. Dabei wird der elektrisch betätigbare Lader im Falle der Diagnose des Tankentlüftungssystems abgeschaltet. Danach wird gemäß Schritt 108 die Diagnoseentscheidung getroffen und im Fehlerfall ein Fehlereintrag und/oder eine Fehlerlampe angesteuert.

Zusammenfassend ist festzustellen, dass nach Abstellen des Motors der elektrische Lader für eine vorbestimmte Zeitdauer oder bis zur Einstellung eines bestimmten Überdrucks oder bis zur Einstellung eines bestimmten Luftstromes betätigt wird, wobei wenigstens eine dieser Größen abhängig von der Motortemperatur und/oder der Katalysatortemperatur und/oder der Temperatur des Abgastraktes ist. Je nach Ausführung wird nur eine dieser Größen oder eine beliebige Oder-Kombination dieser Größen abgeprüft.

## Patentansprüche

1. Verfahren zum Betreiben eines elektrischen Laders, welcher mittels eines Ansteuersignals von einer elektronischen Steuereinheit aus angesteuert wird, und durch den eine Luftströmung und/oder ein Überdruck im Ansaugtrakt und/oder im Abgastrakt einer Brennkraftmaschine erzeugbar ist, **dadurch gekennzeichnet, dass** die Betätigung des elektrischen Laders im nicht gefeuerten Betrieb der Brennkraftmaschine vorgenommen wird.

2. Verfahren nach Anspruch 1 **dadurch gekennzeichnet, dass** die Betätigung des elektrischen Laders nach Abschalten der Brennkraftmaschine erfolgt.

3. Verfahren nach Anspruch 1, **dadurch gekennzeichnet, dass** die Betätigung des elektrischen Laders im Schiebebetrieb des Fahrzeugs erfolgt.

4. Verfahren nach einem der vorhergehenden Ansprüche, **dadurch gekennzeichnet, dass** die Ansteuerung des elektrischen Laders nach Abschalten der Brennkraftmaschine und bei stehendem Fahrzeug vorgenommen wird.

5. Verfahren nach einem der vorhergehenden Ansprüche, **dadurch gekennzeichnet, dass** der elektrische Lader für eine vorbestimmte Zeitdauer oder bis zur Einstellung eines bestimmten Überdrucks oder Luftstromes betätigt wird.

6. Verfahren nach Anspruch 5, **dadurch gekennzeichnet, dass** diese Zeitdauer abhängig von der Motortemperatur und/oder der Katalysatortemperatur und/oder der Temperatur des Abgastraktes ist.

7. Verfahren nach einem der vorhergehenden Ansprüche, **dadurch gekennzeichnet, dass** nach Abstellen des Motors über eine mit der Kurbelwelle verbundene elektrische Maschine die Brennkraftmaschine in eine vorgegebene Position mit vorbestimmten Ventilüberschneidungen geführt wird.

8. Verfahren nach einem der vorhergehenden Ansprüche, **dadurch gekennzeichnet, dass** das wenigstens eine Ventil eines Tankentlüftungssystems bei Betätigen des elektrischen Laders geöffnet, dann geschlossen wird und auf der Basis des Abfalls eines Drucks im Bereich des Tanksystems und/oder des Ansaugsystems der Brennkraftmaschine auf die Dichtigkeit des Tankentlüftungssystems geschlossen wird.

9. Verfahren nach einem der vorhergehenden Ansprüche, **dadurch gekennzeichnet, dass** durch Öffnen und Schliessen wenigstens eines mit dem Ansaugsystem oder dem Abgastrakt zusammenhängenden Ventils und durch Beobachtung wenigstens eines Drucks im Ansaugsystem auf die Funktionsfähigkeit und Dichtigkeit des Ventils geschlossen wird.

10. Verfahren nach Anspruch 9, **dadurch gekennzeichnet, dass** um ein elektrisch ansteuerbares Ein- oder Auslassventil handelt.

11. Verfahre nach einem der vorhergehenden Ansprüche, **dadurch gekennzeichnet, dass** bei Betätigen des elektrischen Laders durch Überprüfen des Messsignalgrößen von wenigstens eines Sensors, der Temperaturen im Bereich des Ansaugtrakts und/oder des Abgastrakts und/oder die Luftströmung im Ansaugtrakt und/oder Druck im Ansaugtrakt erfasst, die Messsignalerfassung auf Funktionsfähigkeit geprüft wird.

12. Verfahren nach einem der vorhergehenden Ansprüche, **dadurch gekennzeichnet, dass** aus Sensorsignalen, aus mit dem Ansaug- und/oder Abgastrakt verbundenen Sensoren, vor oder nach der Laderansteuerung auf die Funktionsfähigkeit des elektrischen Laders geschlossen wird.

13. Vorrichtung zum Betreiben eines elektrischen Laders, mit einer elektronischen Steuereinheit, die ein Ansteuersignal für den elektrischen Lader erzeugt, **dadurch gekennzeichnet, dass** die Steuereinheit das Ansteuersignal im nicht gefeuerten Betrieb der Brennkraftmaschine ausgibt.
